# EUROPÄISCHE PATENTSCHRIFT

(11) **EP 2 468 459 B1**
(45) Veröffentlichungstag und Bekanntmachung des Hinweises auf die Patenterteilung: **04.11.2015**
(21) Anmeldenummer: 11189484.6
(22) Anmeldetag: 17.11.2011
(51) Int. Cl.: B25F 5/02, B25H 1/00, G01B 11/02, G01B 11/27

(54) **Hilfseinrichtung einer Bohrmaschine und Steuerungsverfahren**
Auxiliary device for a drilling machine and control procedure
Dispositif d'aide d'une foreuse et procédé de commande

(30) Priorität: 23.12.2010 DE 102010064107
(43) Veröffentlichungstag der Anmeldung: 27.06.2012
(73) Patentinhaber: HILTI Aktiengesellschaft, 9494 Schaan (LI)
(72) Erfinder: Schmidt, Peer, 88131 Lindau (DE); Schaer, Roland, 9472 Grabs (CH); Liniger, Alexander, 4900 Langenthal (CH); Leuzinger, David, 8006 Zürich (CH)
(74) Vertreter: Hilti Aktiengesellschaft Corporate Intellectual Property

(56) Entgegenhaltungen:
- DE-A1-102010 003 489
- US-A- 5 351 316
- US-B1- 7 200 516

## Beschreibung

### GEBIET DER ERFINDUNG

Die vorliegende Erfindung betrifft eine Hilfseinrichtung einer Bohrmaschine zum Bestimmen einer Entfernung der Bohrmaschine von einem Werkstück und ein zugehöriges Steuerungsverfahren.

US 7200516 B1 beschreibt eine Hilfseinrichtung mit vier gleichgestalteten Leuchtdioden, die jeweils in einem Quadraten um die Werkzeugspindel angeordnet sind. Die Leuchtdioden werfen jeweils einen Lichtkreis auf das Werkstück. Der Anwender erkennt eine nicht senkrechte Orientierung der Werkzeugspindel zu dem Werkstück aufgrund der sich unterschiedlich groß ergebenden Lichtkreise. Ferner ist vorgeschlagen die Leuchtdioden zusätzlich mit Sensoren, z.B. einem Ultraschallsensor, zum Bestimmen einer Entfernung der Leuchtdiode von dem Werkstück zu versehen. Eine Recheneinheit ermittelt anhand der bestimmten Entfernungen die Orientierung der Werkzeugspindel.

DE 10 2010 003 489 A1 hat an einer Bohrmaschine mehrere Laserabstandsmesser. Aus den einzelnen Abstandsmessungen wird die Neigung ermittelt.

### OFFENBARUNG DER ERFINDUNG

Die erfindungsgemäße Hilfseinrichtung ist an einer Bohrmaschine befestigt. Die Hilfseinrichtung kann lösbare oder unlösbare Mittel zum Festlegen an der Bohrmaschine aufweisen, z.B. Schellen, Muffen, Klemmen, Schrauben. Die Hilfseinrichtung enthält eine Kamera, die in Arbeitsrichtung zum Aufzeichnen eines Bildes einer Arbeitsfläche und eines von der Bohrmaschine erzeugten Bohrlochs ausgerichtet ist. Eine Bildverarbeitungseinrichtung ist zum Identifizieren des Bohrlochs in dem Bild vorgesehen. Eine Auswertungseinrichtung, bestimmt basierend auf einem virtuellen Abstand des Bohrlochs zu einem Referenzpunkt in dem Bild eine Entfernung der Bohrmaschine zu dem Werkstück. Eine Anzeigeneinrichtung dient dem Anzeigen der bestimmten Entfernung. Die Erfindung nutzt, dass sich ein virtueller Abstand des Bohrlochs in dem Bild zu der optischen Achse oder Mitte des Bildes mit geringer werdenden Entfernung vergrößert Eine optische Achse der Kamera ist vorzugsweise parallel und versetzt zu einer Arbeitsachse der Bohrmaschine.

Ein Steuerungsverfahren zum Bestimmen einer Entfernung einer Bohrmaschine von einer Arbeitsfläche sieht die Schritte vor: Aufzeichnen eines Bildes einer Arbeitsfläche einschließlich eines von der Bohrmaschine erzeugten Bohrlochs, Identifizieren des Bohrlochs in dem Bild, Bestimmen einer Entfernung der Bohrmaschine zu dem Werkstück basierend auf einem Abstand des Bohrlochs zu einem Referenzpunkt in dem Bild mittels einer Auswertungseinrichtung, und Anzeigen der bestimmten Entfernung mittels einer Anzeigeneinrichtung. Die Bilderkennungseinrichtung kann einen Bohrer in dem Bild identifizieren. Ein auf die optische Achse hinweisendes sichtbares Ende des Bohrers kann ermittelt und als Bohrloch identifiziert werden.

Eine Ausgestaltung sieht vor, dass ein Projektor zum Ausgeben eines ersten Lichtstrahls, der einen ersten Lichtfleck auf der Arbeitsfläche erzeugt, eines zweiten Lichtstrahls, der einen zweiten Lichtfleck auf der Arbeitsfläche erzeugt, vorgesehen ist, wobei die erste und zweite Richtung verschieden sind. Die Auswertungseinrichtung ist eingerichtet basierend auf einem ersten Abstand des in dem Bild aufgezeichneten ersten Lichtflecks zu einem Referenzpunkt und einen zweiten Abstand des in dem Bild aufgezeichneten zweiten Lichtflecks zu dem Referenzpunkt eine Neigung der Bohrmaschine zu dem Werkstück zu bestimmen. Die ermittelte Entfernung der Bohrmaschine zu dem Werkstück kann mit berücksichtigt werden, um die Neigung als absolute Winkel anzugeben.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Bohrmaschine mit einer Hilfseinrichtung
- Fig. 2: ein Bild aufgenommen von der Hilfseinrichtung,
- Fig. 3: eine Detailansicht einer optischen Vermessungseinrichtung der Hilfseinrichtung;
- Fig. 4: eine Detailansicht einer optischen Vermessungseinrichtung der Hilfseinrichtung;
- Fig. 5: einen Monitor einer Anzeigeneinrichtung der Hilfseinrichtung;
- Fig. 6: einen Projektor einer Anzeigeneinrichtung der Hilfseinrichtung;

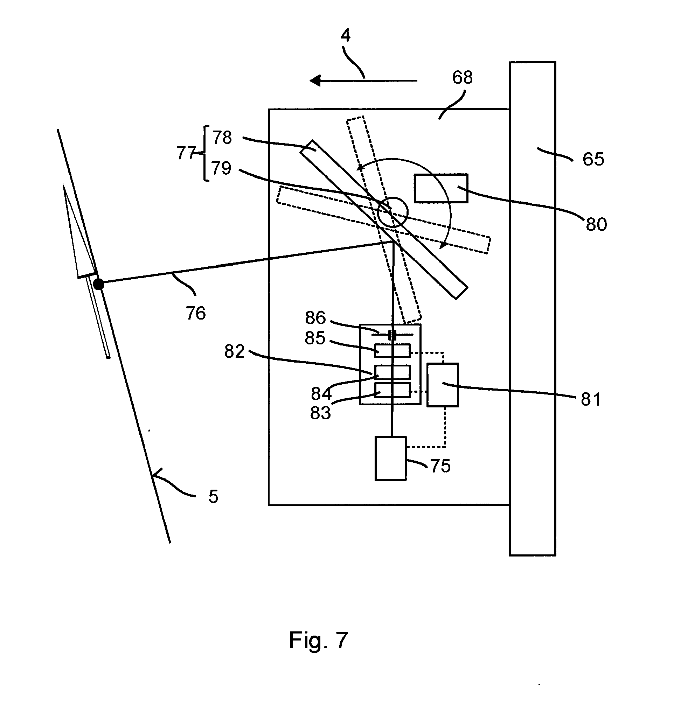

- Fig. 7: einen Projektor einer Anzeigeneinrichtung der Hilfseinrichtung.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

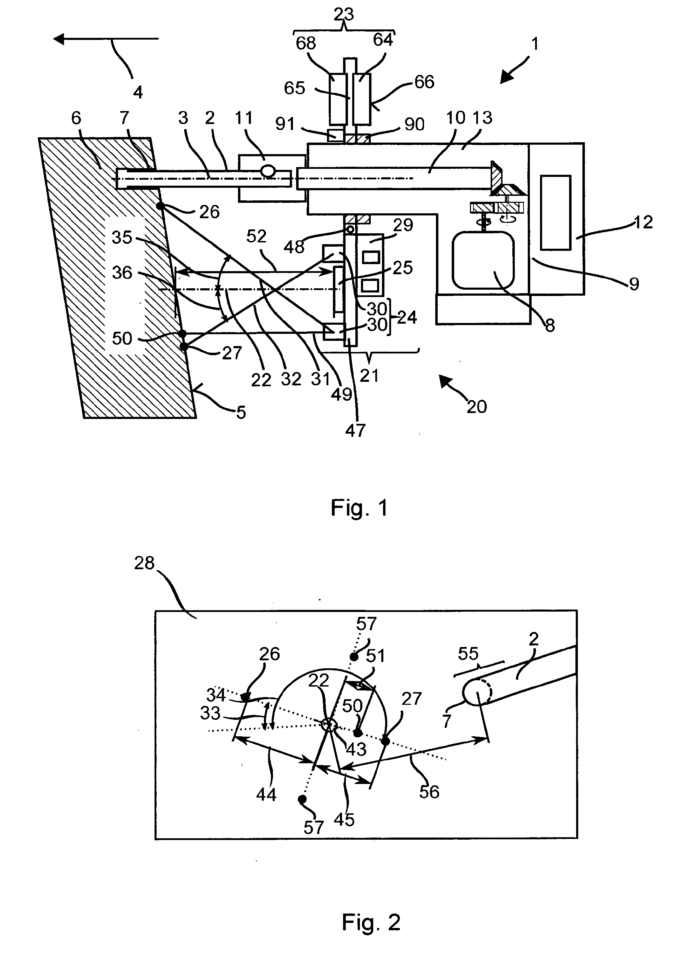

Fig. 1 zeigt eine beispielhafte Bohrmaschine 1, die einen Bohrer 2 um eine Arbeitsachse 3 drehend antreiben kann. Ein Anwender presst den Bohrer 2 in Arbeitsrichtung 4 an eine zu bearbeitende Arbeitsfläche 5 eines Werkstücks 6 an. Der drehende Bohrer 2 erzeugt dabei ein Bohrloch **7** in dem Werkstück **6**. Der Bohrer 2 hat ein Schneidelement aus Hartmetall, z.B. gesintertes Wolframcarbid und/oder Diamant, das durch die Rotation um die Achse Material des Werkstücks 6 abträgt. Das Bohrgut kann durch einen wendelförmigen Schaft oder einen hohlen Schaft des Bohrers abtransportiert werden. Die Schneidelemente können auch entlang einer kreisförmigen Stirnfläche eines topfförmigen Bohrers angeordnet sein.

Ein Antrieb kann einen Motor **8**, z.B. einen Elektromotor, ein Getriebe **9** und eine Abtriebsspindel **10** enthalten. Die Abtriebsspindel **10** überträgt ein Drehmoment auf eine Werkzeugaufnahme **11**, in der Bohrer **2** einsetzbar ist. Ein Anwender kann die Bohrmaschine 1 mittels eines Handgriffs **12** halten und/oder führen, welcher vorzugsweise an einem der Werkzeugaufnahme **11** entfernten Ende eines Maschinengehäuses **13** angeordnet ist.

Eine Hilfseinrichtung **20** erleichtert dem Anwender die Arbeitsachse **3** der Bohrmaschine 1 in einem gewünschten Winkel, vorzugsweise senkrecht, zu der bearbeiteten Arbeitsfläche **5** auszurichten und ausgerichtet zu führen. Eine optische Vermessungseinrichtung **21** kann die Orientierung seiner optischen Achse **22** gegenüber dem Werkstück 6 ermitteln. Eine Anzeigeneinrichtung **23** visualisiert dem Anwender die aktuelle Orientierung. Zusätzlich kann die Hilfseinrichtung 20 eine aktuelle Bohrtiefe ermitteln und mittels der Anzeigeneinrichtung **23** visualisieren.

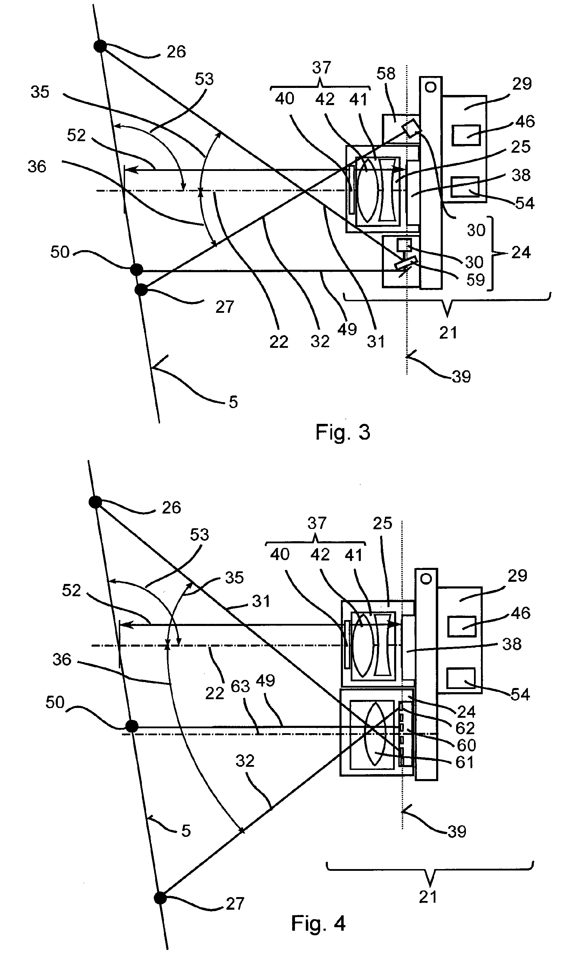

Die optische Vermessungseinrichtung **21** der Hilfseinrichtung **20** hat einen Projektor **24** und eine Kamera **25**, welche detaillierter in Fig. 3 dargestellt sind. Der Projektor **24** erzeugt auf der Arbeitsfläche **5** wenigstens einen ersten Lichtpunkt 26 und einen zweiten Lichtpunkt 27. Die Kamera **25** ist vorzugsweise auf der optischen Achse **22** angeordnet und zeichnet die Arbeitsfläche **5** und die darauf erzeugten Lichtpunkte **26, 27** in einem Bild **28** auf (Fig. 2). Eine Auswertungseinrichtung **29** bestimmt anhand des Bildes 28 und der darin aufgezeichneten Lichtpunkte **26, 27** eine Orientierung der optischen Achse **22** gegenüber der Arbeitsfläche 5.

Ein Beispiel für einen Projektor **24** sind zwei Laserlichtquellen 30, z.B. Laserdioden, die einen ersten Lichtstrahl 31 und einen zweiten Lichtstrahl **32** erzeugen. Der erste Lichtstrahl 31 wird in eine erste Richtung 33und der zweite Lichtstrahl **32** in eine zweite Richtung, welche von der ersten Richtung verschieden ist, emittiert.

Die Richtung der Lichtstrahlen **31, 32** wird nachfolgend in Winkelkoordinaten bezüglich der optischen Achse **22** angegeben. Ein Polarwinkel beschreibt die Neigung eines Lichtstrahls gegenüber der optischen Achse **22** in einer Ebene, die von dem Lichtstrahl und der optischen Achse **22** aufgespannt ist. Ein Azimutwinkel gibt die Orientierung des Lichtstrahls in einer Drehrichtung um die optische Achse **22** an und kann in einer Projektion auf eine Ebene senkrecht zu der optischen Achse **22** bestimmt werden (vgl. Fig. 2).

Bevorzugt unterscheiden sich ein erster Azimutwinkel **33** des ersten Lichtstrahls 31 und ein zweiter Azimutwinkel **34** des zweiten Lichtstrahls **32**. Der erste Azimutwinkel 33 kann sich um 180 Grad von dem zweiten Azimutwinkel **34** unterscheiden, d.h. die beiden Lichtstrahlen **31, 32** liegen mit der optischen Achse **22** in einer Ebene. Ein erster Polarwinkel 35 des ersten Lichtstrahls **31** und ein zweiter Polarwinkel **36** des zweiten Lichtstrahls **32** können gleich sein. Die Polarwinkel **35, 36** liegen vorzugsweise in einem Bereich zwischen 10 Grad und 60 Grad. Der Projektor **24** kann die Lichtstrahlen **31, 32** die optische Achse **22** kreuzend emittieren.

Auf der Arbeitsfläche **5** führen der erste Lichtstrahl **31** zu dem ersten Lichtpunkt **26** und der zweite Lichtstrahl **32** zu dem zweiten Lichtpunkt **27**. Aus der relativen Lage des ersten und des zweiten Lichtpunkts zu der optischen Achse **22** und den Abständen kann die relative Orientierung der optischen Achse **22** zu dem Werkstück **6** bestimmt werden. Die von dem Projektor **24** ausgegebenen Lichtstrahlen 31, 32 können einen kreisförmigen Querschnitt oder von einer anderen Form sein. Lichtpunkte geringen Durchmessers sind aufgrund ihrer einfach bestimmbaren Lage bevorzugt, jedoch können auch anders geformte Lichtflecken, z.B. nicht kreisförmiger Gestalt, Pfeile, Kreuze, auf das Werkstück **6** projiziert werden.

Die Kamera **25** zeichnet die Arbeitsfläche **5** mit den Lichtpunkten **26, 27** auf dem Werkstück **6** auf. Die Kamera **25** kann eine Abbildungsoptik **37** beinhalten, welche die Arbeitsfläche **5** auf einen ortsauflösenden Photosensor **38** abbildet. Der Photosensor **38** wandelt das auf ihn einfallende Licht in ein Bild **28** um, welches in einer Bildebene **39** räumlich aufgelöst eine Intensität des Lichts angibt. Die Lichtpunkte **26, 27** sind zweckmäßigerweise derart hell, dass sie abgebildet in dem Bild **28** die höchste Intensität aufweisen. Ein Farbfilter **40** abgestimmt auf die Farbe der Lichtpunkte **26, 27** kann zu einer Verstärkung des Kontrastes vor dem Photosensor **38** angeordnet sein.

Die Abbildungsoptik **37** kann ein Objektiv **41** aus ein oder mehreren Linsen **42** enthalten. Die Linsen **42** sind vorzugsweise mittig und senkrecht zu der optischen Achse **22** angeordnet. Anstelle oder zusätzlich zu dem Objektiv **41** kann auch eine Blende vorgesehen sein. Der Projektor **24** und die Kamera 25 sind zueinander derart versetzt angeordnet, dass der erste Lichtpunkt **26** von der Kamera **25** unter einer von der erste Richtung verschiedenen Richtung und der zweite Lichtpunkt **27** unter einer von der zweiten Richtung verschiedenen Richtung erfasst werden.

Eine Auswertungseinrichtung **29** liest aus der Kamera **25**, insbesondere dem ortsauflösenden Photosensor **38** das Bild **28** aus. Die hellsten Punkte des Bildes werden als die virtuellen, abgebildeten Lichtpunkte **26, 27** interpretiert. Die Lage der abgebildeten Lichtpunkte **26, 27** zu einem Referenzpunkt **43** in dem Bild **28** oder in der Bildebene **39** wird von der Auswertungseinrichtung **29** ermittelt. In dem Bild **28** werden ein erster Abstand **44** des ersten Lichtpunkts **26** zu dem Referenzpunkt **43** und ein zweiter Abstand **45** des zweiten Lichtpunkts **27** zu dem Referenzpunkt **43**. Die ausgemessenen Abstände sind virtuell. Das Ausmessen kann ein Bestimmen der Koordinaten der Lichtpunkte **26, 27** in dem Bild beinhalten. Zum Ermitteln der Abstände **44, 45** sind beispielsweise zu den Koordinaten zugehörige Abstände in einer Nachschlagetabelle in einem Speicherbauelement **46**, z.B. RAM, Flash-RAM, der Auswertungseinrichtung **29** abgelegt. Der Referenzpunkt **43** kann beliebig festgelegt werden, bevorzugt ist der Referenzpunkt **43** der Schnittpunkt der Bildebene **39** mit der optischen Achse **22** oder eine Mitte des Bildes **28**.

Ein Betriebsmodus der Hilfseinrichtung **20** sieht vor, den Anwender in der senkrechten Ausrichtung der Bohrmaschine **1** gegenüber dem Werkstück **6** zu unterstützen. Die Hilfseinrichtung **20** ist derart an der Bohrmaschine **1** befestigt, dass die optische Achse **22** parallel zu der Arbeitsachse **3** ist. Die Auswertungseinrichtung **29** übermittelt ein Steuersignal, welches die optische Achse **22** gegenüber dem Werkstück **6** geneigt angibt, aus, wenn der erste Abstand **44** zu dem zweiten Abstand **45** verschieden ist. Das Steuersignal gibt an, in welcher Richtung der größere der Abstände **44, 45** liegt. Die Anzeigeneinrichtung **23** visualisiert das Steuersignal dem Anwender. Beispielsweise zeigt die Anzeigeneinrichtung **23** einen in die Richtung weisenden Pfeil an. Der Anwender wird hierdurch angewiesen den Handgriff **12** in die Richtung um das Bohrloch zu verschwenken, bis die Abstände **44, 45** gleich groß sind und die optische Achse **22** senkrecht zum Werkstück **6** ist.

Die optische Vermessungseinrichtung **21** kann auf einer gegenüber der Arbeitsachse **3** verschwenkbaren Plattform **47** angeordnet sein. Insbesondere ist ein Polarwinkel zwischen der optischen Achse **22** und der Arbeitsachse **3** einstellbar. Die Plattform kann beispielsweise mittels eines Kugelgelenks **48** oder Schwenkgelenks an dem Gehäuse der Bohrmaschine **1** befestigt sein. Ein Anwender stellt eine gewünschte, z.B. nicht-parallele Orientierung der optischen Achse **22** gegenüber der Arbeitsachse **3** ein. Die Auswertungseinrichtung **29** und die Anzeigeneinrichtung **23** weisen den Anwender an, die Bohrmaschine 1 mit der optischen Achse **22** senkrecht zum Werkstück **6** zu führen. Ein gebohrtes Bohrloch hat nachfolgend eine Neigung gegenüber der Arbeitsfläche **5**, welche der eingestellten Orientierung der Arbeitsachse **3** gegenüber der optischen Achse **22** entspricht.

In einem weiteren Betriebsmodus kann die Hilfseinrichtung **20** den Winkel der optischen Achse **22** zu der Arbeitsfläche **5** absolut bestimmen. Der Projektor **24** erzeugt einen dritten Lichtstrahl **49**, der vorzugsweise parallel zu der optischen Achse **22** und versetzt zu der optischen Achse **22** ist. Anstelle parallel, kann der dritte Lichtstrahl **49** auch einen verglichen zu dem ersten Lichtstrahl **31** geringen Polarwinkel gegenüber der optischen Achse **22** aufweisen, z.B. zwischen 0 Grad und 5 Grad. Ein sich ergebender dritter Lichtpunkt **50** wird von der Kamera **25** erfasst. Ein virtueller, dritter Abstand **51** des abgebildeten Lichtpunkts **50** von dem Referenzpunkt **43** wird in dem Bild **28** ermittelt. Anhand des dritten Abstandes **51** wird eine Entfernung **52** der Kamera **25** von dem Werkstück **6** bestimmt. Der dritte Abstand **51** wächst in dem Bild **28** mit abnehmender Entfernung **52**. Basierend auf der Entfernung **52**, dem ersten Abstand **44** und dem zweiten Abstand **45** und der Polarwinkel **35** des ersten Lichtstrahls **31** und dem Polarwinkel **36** des zweiten Lichtstrahls **32** kann die Neigung **53** der optischen Achse **22** gegenüber der Arbeitsfläche **5** absolut und quantifiziert ermittelt werden. Vorzugsweise sind in dem Speicherbauelement **46** zu verschiedenen Entfernungen **52**, ersten und zweiten Abständen entsprechende Polarwinkel **35** hinterlegt. Die Anzeigeneinrichtung **23** zeigt die den absoluten Winkel vorzugsweise als Zahlen an.

Eine weitere Ausgestaltung sieht vor, dass der erste Lichtstrahl **31** und zweiten Lichtstrahl **32** einen unterschiedlichen Polarwinkel **35**, **36** zu der optischen Achse **22** aufweisen. Die beiden Lichtstrahlen **31**, **32** können innerhalb einer Ebene verlaufen, welche beispielsweise die optische Achse **22** einschließt. Vorzugsweise ist der erste Lichtstrahl **31** parallel zu der optischen Achse **22**, der zweite Lichtstrahl geneigt zu der optischen Achse **22**. Mittels der optischen Achse **22** als Referenzpunkt **43** können aus dem ersten Abstand **44** und dem zweiten Abstand **45** unmittelbar die absolute Neigung **53** der optischen Achse **22** zu der Arbeitsfläche **5** bestimmt werden.

Der Photosensor **38** kann eine Mehrzahl photosensitiver Zellen aufweisen, welche auf einem Raster angeordnet sind. Koordinaten eines Lichtpunkts entsprechen der Zeile und ggf. Spalte der jeweils von dem Lichtpunkt **26**, **27** beleuchteten Zelle. Eine Zelle kann als Referenzpunkt **43** festgelegt sein. Der Photosensor **38** kann beispielsweise einen CCD-Chip oder einen APS-Sensor enthalten.

Die Kamera **25** kann in dem Bild **28** das Bohrloch **7** in der Arbeitsfläche 5 und den Bohrer 2 aufzeichnen. Die Auswertungseinrichtung 29 enthält eine Bilderkennung 54, die das Bohrloch 7 identifiziert und dessen Koordinaten in dem Bild 28 bestimmt. Die Bilderkennung 54 kann beispielsweise zunächst den Bohrer 2 identifizieren, z.B. anhand seiner länglichen Form und/oder basierend auf einer bekannten Orientierung des Bohrers 2 im Bild 28, welche sich wegen einer festen oder bekannten Anordnung der Kamera 25 relativ zu dem Bohrer 2 ergibt. Die Koordinaten eines Endes 55 des sichtbaren Teils des Bohrers 2 entsprechen den Koordinaten des Bohrlochs 7. In dem Bild 28 wird ein Abstand 56 des Bohrlochs 7 von dem Referenzpunkt 43 bestimmt. Der Abstand 56 ist ein Maß für die Entfernung 52 der Kamera 25 von dem Bohrloch 7 und damit der Arbeitsfläche 5. Die Auswertungseinrichtung 29 kann eine Entfernung der Bohrmaschine 1 basierend auf dem Maß bestimmen und an die Anzeigeneinrichtung 23 zur Visualisierung übermitteln. Die Entfernung 52 kann auch zur Bestimmung der absoluten Winkel 53 herangezogen werden.

Die bisher beschriebenen Ausführungsformen können eine Neigung in Abweichung gegenüber einem Lot oder als absoluten Winkel 53 der optischen Achse 22 gegenüber dem Werkstück 6 in einer ersten Ebene ermitteln. Eine Weiterbildung sieht weitere Lichtstrahlen vor, die um 90 Grad verschiedene Azimutwinkel zu dem ersten und zweiten Lichtstrahl 31, 32 aufweisen. Die Auswertung der Lichtpunkte 57 der weiteren Lichtstrahlen kann analog dem ersten und zweiten Lichtstrahl 31, 32 erfolgen. Hierdurch wird die Neigung in einer zweiten zur ersten senkrechten Ebene ermittelt. Für die Bestimmung der absoluten Winkel 53 kann zusätzlich der dritte Lichtstrahl 49 herangezogen werden, welcher gegenüber der optischen Achse 22 einen zu den anderen Lichtstrahlen 31, 32 unterschiedlichen Polarwinkel hat. In einer Ausführungsform sind drei Lichtstrahlen verschiedener Orientierung vorgesehen, von denen sich zwei wenigstens im Azimutwinkel unterscheiden und zwei sich wenigstens im Polarwinkel unterscheiden. Zusätzlich oder anstelle des dritten Lichtstrahls 49 kann ein Ausmessen des Abstandes 56 des Bohrlochs 7 von der optischen Achse 22 in dem Bild 28 zur Entfernungsbestimmung verwendet werden.

Der Projektor 24 kann aus mehreren einzelnen, unabhängigen Laserlichtquellen 30 zusammengesetzt sein. Die Laserdioden 30 können entsprechend den vorgegebenen Richtungen der Laserstrahlen 32 ausgerichtet in einem Gehäuse 58 angeordnet sein. Der Projektor 24 kann auch einen Strahlteiler 59 aufweisen, um einen Lichtstrahl in zwei Lichtstrahlen 31, 49 aufzuspalten. Der Strahlteiler 59 kann beispielsweise ein Glasplättchen oder ein Bündel von Glasfasern enthalten.

In einer anderen Ausgestaltung hat der Projektor **24** einen selbstleuchtenden Bildschirm **60** und eine Abbildungsoptik **61** (Fig. 4). Der Bildschirm **60** kann beispielsweise eine hintergrundbeleuchtete Flüssigkristallanzeige, eine Matrix aus Leuchtdioden etc. sein. Auf dem Bildschirm **60** können aus mehreren Bildpunkten **62** zusammengesetzte Symbole dargestellt werden. Die Abbildungsoptik **61** bildet das auf dem Bildschirm **60** dargestellte Bild auf die Arbeitsfläche **5** ab. Die Abbildungsoptik **61** kann ein oder mehrere Linsen aufweisen, die entlang einer optischen Achse **63** der Abbildungsoptik **61** angeordnet sind. Die optische Achse **63** verläuft durch den Bildschirm **60**, vorzugsweise durch die Mitte des Bildschirms **60**. Bildpunkte nahe der optischen Achse **63** führen zu weitgehend zu der optischen Achse **22** parallele Lichtstrahlen, während Bildpunkte nahe dem Bildschirmrand durch zu der optischen Achse **63** geneigte Lichtstrahlen **31**, **32** auf die Arbeitsfläche **5** projiziert werden. Die Neigung der Lichtstrahlen kann durch die Brennweite der Abbildungsoptik 61 eingestellt werden.

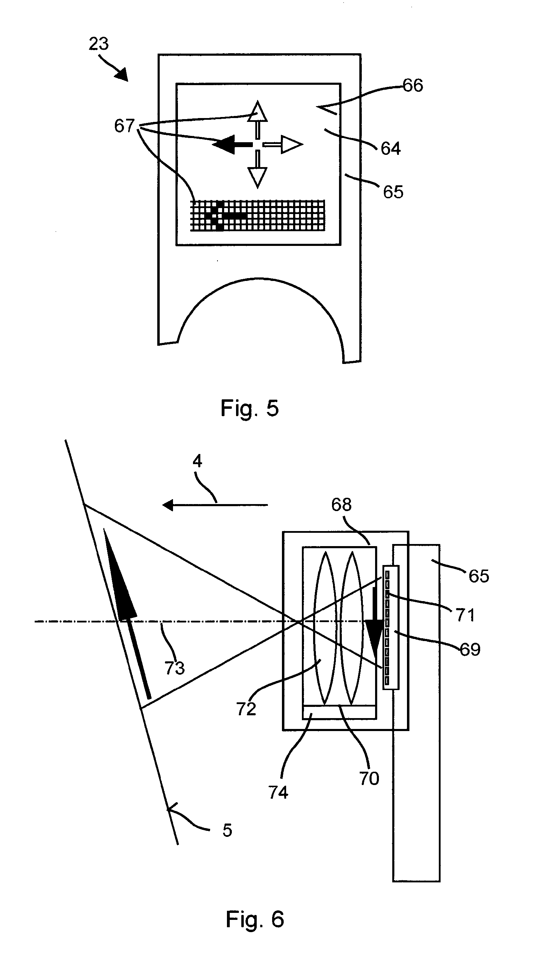

Die Anzeigeneinrichtung **23** hat einen Monitor **64** der an einem Träger **65** der Hilfseinrichtung 20 befestigt ist. Der Monitor **64** ist mit seiner ablesbaren Fläche **66** dem Anwender zugewandt, d.h. entgegen der Arbeitsrichtung **4** orientiert. Der Anwender kann beim Führen der Bohrmaschine **1** in Arbeitsrichtung **4** Informationen auf dem Monitor **64** ablesen. Mehrere elektrooptische Segmente **67** sind voneinander unabhängig zwischen einem hellen und einem dunklen Zustand umschaltbar (Fig. 5). Die Segmente **67** können selbstleuchtend, z.B. eine Zeile oder eine Matrix aus Leuchtdioden, oder eine Hintergrundbeleuchtung abschattend, z.B. mehrere Flüssigkristallzellen, sein. Die Segmente **67** können in der Form von Pfeilen ausgebildet sein, die in **90** Grad Schritten gedreht angeordnet sind. Bei einer Neigung der optischen Achse **22** gegenüber der Arbeitsfläche **5** wird jeweils eines der Segmente **67** entsprechend dem Steuersignal der Auswertungseinrichtung **29** aktiviert. Die Segmente **67** können auch als eine Vielzahl von Bildpunkten auf einem Raster ausgebildet sein, die zusammen aktiviert Pfeile, Ziffern, Buchstaben etc. darstellen. Das Beispiel von Fig. 5 zeigt eine Gruppe von dunkel geschalteten Segmenten **67**, welche eine Neigung nach rechts angeben und den Anwender deshalb auffordern die Bohrmaschine **1** nach links zu verschwenken. Die Segmente **67** sind auf einer dem Werkzeug **2** abgewandten Fläche des Hilfseinrichtung **20** angeordnet. Der Anwender kann die dargestellten Richtungen unmittelbar auf der Hilfseinrichtung **20** ablesen.

Die Anzeigeneinrichtung **22** hat beispielsweise einen Projektor **68**, der eine durch die Anzeigeneinrichtung **22** darzustellende Information auf die Arbeitsfläche **5** projiziert (Fig. 6). Der Projektor **68** weist in Arbeitsrichtung **4**. Der Projektor **68** kann einen selbstleuchtenden Bildschirm **69** und eine Abbildungsoptik **70** aufweisen.

Der Bildschirm 69 setzt sich aus mehreren individuell ansteuerbaren elektrooptischen Leuchtelementen **71** zusammen. Jedes der elektrooptischen Elemente **71** kann in einem Schaltzustand Licht emittieren und in einem anderen Schaltzustand kein Licht emittieren. Die elektrooptischen Elemente **71** können beispielsweise hintergrundbeleuchtete Flüssigkristallanzeigen, punktförmige oder anders geometrisch gestalteten Leuchtdioden, ein von einer Lampe beleuchtetes Feld von Mikrospiegeln etc. enthalten. Beispielhaft ist der Bildschirm **69** mit mehreren elektrooptischen Elementen **71**, die auf einem Raster angeordnet sind, dargestellt. Die Bildpunkte können einzeln oder in Gruppen leuchten, um ein oder mehrere gewünschte Symbole darzustellen. Die Symbole sind Pfeile, Ziffern, Buchstaben etc. Die Vermessungseinrichtung **21** steuert den Projektor **68** an. Dabei werden je nach von der Vermessungseinrichtung **21** übermittelter Daten unterschiedliche Gruppen der elektrooptischen Elemente **71** leuchtend geschaltet. Die Gruppen unterscheiden sich paarweise wenigstens in einem Element **71**, das für die eine Gruppe leuchtenden und die andere Gruppe nicht-leuchtend geschaltet ist.

Die Abbildungsoptik **70** bildet die auf dem Bildschirm 69 dargestellten Symbole auf die Arbeitsfläche **5** ab. Die Abbildungsoptik **70** hat ein Objektiv **72** aus ein oder mehreren Linsen. Eine Brennweite und ein Fokuspunkt des Objektivs **72** kann einstellbar sein. Beispielsweise kann das Objektiv **72** längs seiner optischen Achse **73** durch einen Schlitten **74** bewegt werden. Alternativ kann das Objektiv **72** eine flüssige Linse enthalten, deren Brennweite durch Anlegen eines elektrischen Feldes einstellbar ist.

Eine andere Ausgestaltung des Projektors 68 hat eine Lichtquelle **75** zum Erzeugen eines Lichtstrahls 76, vorzugsweise einen Laser, und eine Ablenkeinrichtung **77**. Die Ablenkeinrichtung **77** hat beispielsweise einen Spiegel **78,** der um zwei Achsen **79** drehbar oder schwingbar aufgehängt ist. Der Spiegel **78** kann durch einen Erreger **80,** z.B. piezoelektrisch, magnetisch oder elektrostatisch, zu einer Schwingung um die beiden Achsen **79** angeregt sein. Der Spiegel **78** kann auch um eine oder beide Achsen 79 rotieren. Für eine Ablenkung des Lichtstrahls **76** in zwei Richtungen können auch zwei schwingende oder rotierende Spiegel vorgesehen sein. Der Lichtstrahl 76 wird entlang eines Rasters z.B. einer Lissajous-Figur über die Arbeitsfläche 5 abgelenkt.

Eine Ansteuerungseinrichtung 81 schaltet eine Intensität des Lichtstrahls **76** in Abhängigkeit der Stellung der Ablenkeinrichtung **77**, um Symbole auf die Arbeitsfläche 5 zu projizieren. Ein Schaltmuster kann für verschiedene benötigte Symbole, z.B. Pfeile, Ziffern, in einem Speicherbauelement der Ansteuereinrichtung 81 hinterlegt sein. Die Schaltmuster legen die Intensität bezogen auf eine Winkelstellung des Spiegels **78** fest. Die Intensität des Lichtstrahls **76** wird reduziert, sobald sich der Lichtstrahl **76** außerhalb von Bereichen des Symbols befindet. Das Schalten der Intensität kann durch Schalten einer Stromzufuhr für die Lichtquelle **75** mittels der Ansteuerungseinrichtung **81** erfolgen. Ferner kann das Schalten durch einen Intensitätsmodulator **82** erfolgen, welcher z.B. eine Kombination einer Pockelszelle 83 zum Ändern einer Polarisation und einen nachgeschalteten Polarisationsfilter **84** und/oder eine Kombination aus einem akkustooptischen Modulator 85 zum Ändern einer Ausbreitungsrichtung des Lichtstrahls und einer nachgeschalteten Blende **86** enthält.

Eine Ausgestaltung sieht vor den Projektor **68** der Anzeigeneinrichtung **23** für die Darstellung von Messergebnissen auch zur Generierung der Lichtflecken **26, 27** auf der Arbeitsfläche **5** zum Ausmessen durch die Vermessungseinrichtung 21 zu verwenden. Ein zusätzlicher Projektor **24** der Vermessungseinrichtung 21 kann entfallen.

Die Hilfseinrichtung **20** kann ein Spannband **90** aufweisen, das um einen Hals 91 oder einen Griff der Bohrmaschine 1 gelegt werden kann. Ein Spannmechanismus **91** klemmt das Spannband an der Bohrmaschine 1 fest. Anstelle eines Spannbandes können auch Schellen durch den Spannmechanismus **91** an der Bohrmaschine 1 angeklemmt werden.

## Patentansprüche

1. Hilfseinrichtung (20), die an einer Bohrmaschine (1) befestigt ist, mit
einer Kamera (25), die in Arbeitsrichtung (4) zum Aufzeichnen eines Bildes (28) einer Arbeitsfläche (5) und eines von der Bohrmaschine (1) in einem Werkstück (6) erzeugten Bohrlochs (7) ausgerichtet ist,
eine Bildverarbeitungseinrichtung (54) zum Identifizieren des Bohrlochs (7) in dem Bild (28),
einer Auswertungseinrichtung (29), die basierend auf einem Abstand (56) des Bohrlochs (7) zu einem Referenzpunkt (43) in dem Bild (28) eine Entfernung (52) der Kamera (25) von dem Bohrloch (7) als Maß für eine Entfernung der Bohrmaschine (1) zu dem Werkstück (6) bestimmt, und
einer Anzeigeneinrichtung (23) zum Anzeigen der bestimmten Entfernung (52).

2. Hilfseinrichtung nach Anspruch 1 **gekennzeichnet durch** einen Projektor (24) zum Ausgeben eines ersten Lichtstrahls (31), der einen ersten Lichtfleck (26) auf der Arbeitsfläche (5) erzeugt, eines zweiten Lichtstrahls (32), der einen zweiten Lichtfleck (27) auf der Arbeitsfläche (5) erzeugt, und eines dritten Lichtstrahls (49) zum Erzeugen eines dritten Lichtflecks (50) auf die Arbeitsfläche (5), wobei die Lichtstrahlen derart orientiert ausgeben sind, dass auf eine optische Achse (22) der Kamera (25) bezogene Azimutwinkel des ersten Lichtstrahls (31) und des zweiten Lichtstrahls (32) verschieden sind und auf die optische Achse (22) bezogene Polarwinkel des ersten Lichtstrahls (31) und des dritten Lichtstrahls (49) verschieden sind.

3. Hilfseinrichtung nach Anspruch 1 oder 2, **dadurch gekennzeichnet, dass** die Kamera (25) eingerichtet ist, den ersten Lichtfleck (26) und den zweiten Lichtfleck (27) in dem Bild (28) aufzuzeichnen,
eine Auswertungseinrichtung (29) basierend auf einem ersten Abstand des in dem Bild (28) aufgezeichneten ersten Lichtflecks (26) zu dem Referenzpunkt (43) und einen zweiten Abstand (45) des in dem Bild aufgezeichneten zweiten Lichtflecks (27) zu dem Referenzpunkt (43) eine Neigung (53) der Bohrmaschine (1) zu dem Werkstück (6) bestimmt, und die Anzeigeneinrichtung (23) ansprechend auf die Auswertungseinrichtung (29) die bestimmten Neigung (53) anzeigt.

4. Hilfseinrichtung nach einem der vorhergehenden Ansprüche, **dadurch gekennzeichnet, dass** eine optische Achse (22) der Kamera (25) parallel und versetzt zu einer Arbeitsachse (3) der Bohrmaschine (1) ist.

5. Steuerungsverfahren zum Bestimmen einer Entfernung einer Bohrmaschine (1) von einer Arbeitsfläche (5) mit den Schritten:
Aufzeichnen eines Bildes (28) einer Arbeitsfläche (5) einschließlich eines von der Bohrmaschine (1) erzeugten Bohrlochs (7) mit einer an der Bohrmaschine (1) befestigten Kamera (25),
Identifizieren des Bohrlochs (7) in dem Bild (28),
Bestimmen einer Entfernung (52) der Kamera (25) zu dem Bohrloch (7) als Maß für eine Entfernung der Bohrmaschine (1) zu dem Werkstück (6) basierend auf einem Abstand (56) des Bohrlochs (7) zu einem Referenzpunkt (43) in dem Bild (28) mittels einer Auswertungseinrichtung (29), und
Anzeigen der bestimmten Entfernung (52) mittels einer Anzeigeneinrichtung (23).

6. Steuerungsverfahren nach Anspruch 5, **dadurch gekennzeichnet, dass** ein Bohrer (2) in dem Bild (28) identifiziert wird und ein auf die optische Achse (22) hinweisendes sichtbares Ende (55) des Bohrers (2) als Bohrloch (7) identifiziert wird.

7. Steuerungsverfahren nach Anspruch 5 oder 6, **dadurch gekennzeichnet, dass** ein erster Lichtstrahl (31) in eine erste Richtung zum Erzeugen des ersten Lichtflecks (26), ein zweiter Lichtstrahl (32) in eine zweite Richtung zum Erzeugen des zweiten Lichtflecks (27), ausgegeben wird, wobei die erste Richtung und die zweite Richtung verschieden sind,
der ersten Lichtflecks und des zweiten Lichtflecks in dem Bild (28) aufgezeichnet werden,
ein erster Abstands des in dem Bild (28) aufgezeichneten ersten Lichtflecks (26) zu dem Referenzpunkt (43) und ein zweiter Abstand (45) des in dem Bild aufgezeichneten zweiten Lichtflecks (27) zu dem Referenzpunkt (43) bestimmt werden und eine Neigung (53) der Bohrmaschine (1) zu der Arbeitsfläche (5) basierend auf dem ersten Abstand (44), dem zweiten Abstand (45) und der bestimmten Entfernung durch die Auswertungseinrichtung (29) ermittelt wird.

## Claims

1. Auxiliary device (20) attached to a drilling machine (1), comprising
a camera (25) aligned in the working direction (4) for recording an image (28) of a working surface (5) and of a hole (7) produced in a workpiece (6) by the drilling machine (1),
an image processing device (54) for identifying the drill hole (7) in the image (28),
an evaluation device (29) that determines the distance (52) of the camera (25) from the drill hole (7) as a measurement for the distance from the drilling machine (1) to the workpiece (6) based on the distance (56) from the drill hole (7) to a reference point (43) in the image (28), and
a display device (23) for displaying the determined distance (52).

2. Auxiliary device according to claim 1, **characterised by** a projector (24) for emitting a first light beam (31) generating a first light spot (26) on the working surface (5), a second light beam (32) generating a second light spot (27) on the working surface (5) and a third light beam (49) for generating a third light spot (50) on the working surface (5), the emitted light beams being oriented in such a manner that azimuth angles of the first light beam (31) and of the second light beam (32) relative to an optical axis (22) of the camera (25) are different and polar angles of the first light beam (31) and of the third light beam (49) relative to the optical axis (22) are different.

3. Auxiliary device according to claim 1 or claim 2, **characterised in that** the camera (25) is adapted to record the first light spot (26) and the second light spot (27) in the image (28),
an evaluation device (29) determines the inclination (53) of the drilling machine (1) relative to the workpiece (6) based on a first distance from the first light spot (26) recorded in the image (28) to the reference point (43) and a second distance (45) from the second light spot (27) recorded in the image to the reference point (43), and the display device (23) displays the determined inclination (53) in response to the evaluation device (29).

4. Auxiliary device according to one of the preceding claims, **characterised in that** an optical axis (22) of the camera (25) is parallel and offset relative to a working axis (3) of the drilling machine (1).

5. Control method for determining the distance of a drilling machine (1) from a working surface (5), comprising the steps of:
recording an image (28) of a working surface (5) including a hole (7) produced by the drilling machine (1) with a camera (25) attached to the drilling machine (1),
identifying the drill hole (7) in the image (28),
determining the distance (52) from the camera (25) to the drill hole (7) as a measurement for the distance from the drilling machine (1) to the workpiece (6) based on the distance (56) from the drill hole (7) to a reference point (43) in the image (28) by means of an evaluation device (29), and
displaying the determined distance (52) by means of a display device (23).

6. Control method according to claim 5, **characterised in that** a drill (2) is identified in the image (28) and a visible end (55) of the drill (2) pointing towards the optical axis (22) is identified as the drill hole (7).

7. Control method according to claim 5 or claim 6, **characterised in that** a first light beam (31) is emitted in a first direction for generating the first light spot (26) and a second light beam (32) is emitted in a second direction for generating the second light spot (27), the first direction and the second direction being different, the first light spot and the second light sport are recorded in the image (28),
a first distance from the first light spot (26) recorded in the image (28) to the reference point (43) and a second distance (45) from the second light sport (27) recorded in the image to the reference point (43) are determined and the inclination (53) of the drilling machine (1) relative to the working surface (5) is determined by the evaluation device (29) based on the first distance (44), the second distance (45) and the determined distance.

## Revendications

1. Dispositif auxiliaire (20) fixé sur une perceuse (1), comportant :
une caméra (25) qui est orientée dans une direction de travail (4) pour enregistrer une image (28) d'une surface de travail (5) et une d'un trou foré (7) généré par la perceuse (1) dans une pièce (6),
un dispositif de traitement d'image (54) pour identifier le trou foré (7) dans l'image (28),
un dispositif d'évaluation (29) qui détermine, sur la base d'une distance (56) du trou foré (7) par rapport à un point de référence (43) dans l'image (28), une distance entre la caméra (25) et le trou foré (7) en tant que mesure pour une distance entre la perceuse (1) et la pièce (6), et
un dispositif d'affichage (23) pour afficher la distance (52) déterminée.

2. Dispositif auxiliaire selon la revendication 1, **caractérisé par** un projecteur (24) destiné à émettre un premier faisceau lumineux (31) qui génère un premier spot lumineux (26) sur la surface de travail (5), un deuxième faisceau lumineux (32) qui génère un deuxième spot lumineux (27) sur la surface de travail (5), et un troisième faisceau lumineux (49) pour générer un troisième spot lumineux (50) sur la surface de travail (5), dans lequel les faisceaux lumineux sont émis de manière orientée de telle sorte qu'un angle d'azimut du premier faisceau lumineux (31) par rapport à un axe optique (22) de la caméra (25) est différent d'un angle d'azimut du deuxième faisceau lumineux (32) par rapport à l'axe optique (22) de la caméra (25), et l'angle polaire du premier faisceau lumineux (31) par rapport à l'axe optique (22) est différent de l'angle polaire du troisième faisceau lumineux (49) par rapport à l'axe optique (22).

3. Dispositif auxiliaire selon la revendication 1 ou 2, **caractérisé en ce que** la caméra (25) est agencée de manière à enregistrer le premier spot lumineux (26) et le deuxième spot lumineux (27) dans l'image (28),
un dispositif d'évaluation (29) détermine, sur la base d'une première distance entre le premier spot lumineux (26) enregistré dans l'image (28) et le point de référence (43) et d'une seconde distance (45) entre le deuxième spot lumineux (27) enregistré dans l'image et le point de référence (43), une inclinaison (53) de la perceuse (1) par rapport à la pièce (6), et le dispositif d'affichage (23) affiche en réponse l'inclinaison déterminée (53) sur le dispositif d'évaluation (29).

4. Dispositif auxiliaire selon l'une des revendications précédentes, **caractérisé en ce qu'**un axe optique (22) de la caméra (25) est parallèle et décalé par rapport à un axe de travail (3) de la perceuse (1).

5. Procédé de commande destiné à déterminer une distance entre une perceuse (1) et une surface de travail (5), comportant les étapes consistant à :
enregistrer une image (28) d'une surface de travail (5) incluant un trou foré (7) généré par la perceuse (1), avec une caméra (25) fixée sur la perceuse (1),
identifier le trou foré (7) dans l'image (28),
déterminer une distance (52) entre la caméra (25) et le trou foré (7) en tant que mesure pour une distance entre la perceuse (1) et la pièce (6), sur la base d'une distance (56) entre le trou foré (7) et un point de référence (43) dans l'image (28) au moyen d'un dispositif d'évaluation (29), et
afficher la distance (52) déterminée au moyen d'un dispositif d'affichage (23).

6. Procédé de commande selon la revendication 5, **caractérisé en ce qu'**un foret (2) est identifié dans l'image (28) et une extrémité (55) du foret (2) visible pointant vers l'axe optique (22) est identifiée en tant que trou foré (7).

7. Procédé de commande selon la revendication 5 ou 6, **caractérisé en ce qu'**un premier faisceau lumineux (31) est émis dans une première direction pour générer le premier spot lumineux (26), un second faisceau lumineux (32) est émis dans une seconde direction pour générer le second spot lumineux (27), la première direction et la seconde direction étant différentes,
le premier spot lumineux et le second spot lumineux sont enregistrés dans l'image (28),
une première distance entre le premier spot lumineux (26) enregistré dans l'image (28) et le point de référence (43) et une seconde distance (45) entre le second spot lumineux (27) enregistré dans l'image et le point de référence (43) sont déterminées, et une inclinaison (53) de la perceuse (1) par rapport à la surface de travail (5) est déterminée sur la base de la première distance (44), de la seconde distance (45) et de la distance déterminée par le dispositif d'évaluation (29).
